# EUROPEAN PATENT SPECIFICATION

(11) **EP 3 838 729 B1**
(45) Date of publication and mention of the grant of the patent: **16.08.2023**
(21) Application number: 20215094.2
(22) Date of filing: 17.12.2020
(51) Int. Cl.: B62K 3/00, B62K 15/00, B62M 6/00

(54) **ELECTRIC SCOOTER**
ELEKTRISCHER MOTORROLLER
TROTTINETTE ÉLECTRIQUE

(30) Priority: 20.12.2019 ES 201931141
(43) Date of publication of application: 23.06.2021
(73) Proprietor: Seat, S.A., 08760 Martorell (ES)
(72) Inventor: SOLÁ GOMFAUS, Andreu, 08760 Martorell (ES); LÓPEZ ROSA, Eva, 08760 Martorell (ES); SÁNCHEZ TEBAR, Irma, 08760 Martorell (ES)
(74) Representative: Elzaburu S.L.P.

(56) References cited:
- WO-A1-2019/201508
- DE-A1-102011 084 754

## Description

### Object

The present invention relates to an electric scooter and its foldable charging system that transports one or more people and is in turn transportable as a backpack once compactly folded.

### State of the art

A means of transportation for individual use intended for moving around a city and incorporating a rechargeable electrical power supply and/or batteries, such as rechargeable electric scooters, is known in the state of the art.

The rechargeable electric scooter comprises an elongated platform on which the user stands supported by two aligned rear wheels, a front drive and steering wheel mechanically fixed to handlebars linked to the front drive wheel acting as a steering bar. The electric scooter also incorporates power supply means connected to an electric motor to drive said electric scooter and the user, where it constitutes a non-polluting means of transport, i.e., the electric scooter has a low CO₂ footprint.

The existence of handlebars provides the user with a holding point. The handlebars can be collapsible and integral with the front drive wheel, such that it pulls said wheel along with it when being folded.

The electric scooter is a personal mobility vehicle prized for its characteristics, ease of transport, low cost, environmental friendliness, etc.; however, by being precisely vehicles for personal use with a simple structure, the user faces the problem of how to transport the electric scooter when the need to transport it arises, such as for example, when a user goes into a means of collective transport such as a bus, the subway, etc., where there is sometimes no space for the electric scooter due to the large number of people taking the means of collective transport. Additionally, they are devices with significant weight that are hard to transport in the folded position due both to said weight and to the space or volume they take up. Furthermore, the charging system of current scooters requires the connection thereof through a conventional charger, so in the event that the scooter runs out of battery, it is very difficult for the user to get hold of the connection means to be able to continue using the scooter normally.

Document DE102011084754A1, which shows all the features of the preamble of independent claim 1, shows a known electric scooter.

It is therefore necessary to offer an alternative to the state of the art which covers the shortcomings identified therein by means of providing a foldable electric scooter which is compact, readily rechargeable while it is inside the means of transportation, and particularly lacks the drawbacks indicated above, among others.

### Summary

The present invention seeks to solve one or more of the aforementioned drawbacks by means of an electric scooter as defined in the claims.

A user can use the electric scooter to move around in an urban environment. After transporting the user, the electric scooter is folded or the configuration thereof is changed for the user to stack or transport same, such that the configuration of the electric scooter can be changed from a folded position to a usage position or vice versa.

For such purpose, according to a first aspect, the present invention relates to an electric scooter comprising:
- a front wheel,
- at least one rear wheel,
- a base platform extending between the at least one rear wheel and the front wheel, and
- a steering column comprising a lower portion and an upper portion, wherein the steering column is mechanically coupled at a lower end of the lower portion to the front wheel, and at an upper end of the upper portion to grip bars.

Unlike electric scooters that are already known in the state of the art, the present invention is characterized in that the electric scooter comprises a retractable front hinge mechanically linking the lower portion of the steering column to the base platform, and a forward-facing front joint mechanically linking the upper portion of the steering column with the lower portion thereof. Furthermore, the steering column is movable between a usage position in which the upper portion is arranged as a prolongation of the lower portion, the lower portion and the upper portion being at an angle between 70 ° and 90 ° with respect to the plane defined by the base platform, and a folded position in which the lower portion and the upper portion are arranged above the base platform and substantially parallel to the plane defined by said base platform.

"Usage position" is understood to be the position in which the scooter is completely unfolded and is used by the user to move around.

"Folded position" is understood to be the position in which all the components of the electric scooter are arranged such that, as a whole, they minimize the volume and dimensions of the electric scooter, such that the electric scooter can be transported, stored, and readily recharged.

In a preferred embodiment of the invention, the base platform preferably has a pentagon-type geometric shape extending between the two rear wheels and the front wheel, allowing greater stability for the user who is standing thereon as he or she moves around, such that, in the folded position of the foldable electric scooter, the upper portion has a pentagon-type geometric shape in accordance with the geometry of the base platform, having all the components arranged on top of said base platform.

According to the invention, in order to obtain a compact folding, the retractable front hinge defines a first axis of rotation, wherein the retractable front hinge is configured for rotating the lower portion of the steering column towards the base platform according to a first direction of rotation.

For an implementation of said embodiment, the forward-facing front joint defines a second axis of rotation, wherein the forward-facing front joint is configured for rotating the upper portion of the steering column with respect to the lower portion thereof according to a direction of rotation opposite the first direction of rotation, such that the upper portion of the column is folded on the lower portion of the column, protecting the lower portion of the column from possible impacts.

Furthermore, also according to the invention, the lower portion is configured as an electrical energy storage unit comprising an electrical outlet arranged at the upper end of the lower portion of the steering column, wherein the electrical outlet is arranged in the vertical of the back-facing rear edge of the base platform with the electric scooter being in the folded position, such that the lower portion of the steering column overlapping the base of the platform and the electric scooter can be charged when it is in the folded position.

According to a preferred embodiment, the distance between the first axis of rotation and the electrical outlet of the lower portion is substantially equal to the distance between the first axis of rotation and the back-facing rear edge of the base platform.

A compact and easy-to-use assembly is achieved with the mentioned composition and construction of the electric scooter, reducing the volume taken up by said electric scooter in the folded position and improving user experience.

Preferably, the upper portion of the steering column comprises an upward U-shaped geometry, wherein the grip bars are arranged at the upper end of the upper portion and are furthermore movable by way of entry thereof into the upper portion for increasing or reducing the working distance of the grip bars so as to adapt the working distance to the user's height.

In one example of the invention, the grip bars are rotatably connected to the corresponding upper ends of the upward U-shaped upper portion which extend beyond the joint, such that the grip bars can be rotated from a usage position in which they are open to a position in which they are closed or folded towards a longitudinal axis of the lower portion of the steering column to adopt a downward V shape.

Additionally, the upper portion comprises a concave bar arranged horizontally between the upper ends of both side arms of the U-shaped upper portion.

The fact that the concave bar is located in the upper portion means that, in a folded position, it serves to protect and immobilize the front wheel. That is, when the scooter is in the folded position, said concave bar accommodates, protects, and retains the front wheel by fixing it to the folded structure and allowing the wheel to be firmly retained and protected in the compact folded position.

The grip bars and the upper portion are arranged such that they can pivot together with respect to the lower portion which can in turn pivot towards the base platform, allowing a very compact configuration in the folded position of the electric scooter.

As a result of a first embodiment, the foldable electric scooter has a compact structure in the folded position with the elements of the electric scooter extending in different planes. That is, in the folded position, the electric scooter has a sandwich-type structure of at least two layers or planes, wherein in the folded position, the front wheel and the lower portion of the steering column are arranged above the base platform, such that the lower portion of the steering column is arranged inside the hollow inner part generated by the presence of the U-shaped concave bar of the U shape of the upper portion which is in turn arranged on the rear wheels. Moreover, the grip bars are rotated into the position in which they are closed and have a V shape, being arranged above the front wheel. That is, for an example of the present invention, the foldable electric scooter is in the form of a sandwich with three different levels if it is in the folded position:

The upper level corresponds to the upper portion of the steering column and the grip bars, wherein the horizontal concave bar going through the upper part generates a cavity shape where the front wheel is accommodated and fixed, such that the fixing of the front wheel is assured and a compact, easy-to-use, and transportable structure is consolidated.

Moreover, the intermediate level corresponds to the composition formed by the combination of the elements of the lower portion, the at least one rear wheel, and the front wheel, forming a completely flat surface in one and the same horizontal plane with respect to the base platform.

Finally, the lower level corresponds with the base platform and serves as a support and bearing structure for the previous layers. This provides rigidity to the structure in a compact folded position.

In the usage position, the lower portion of the steering column is arranged centered with respect to side arms of the U-shaped upper portion, such that the electrical outlet of the lower portion is arranged between both side arms of the lower portion. Accordingly, when transitioning from the usage position to the folded position, the electrical outlet is visible in both cases. Advantageously, the U-shaped geometry of the upper portion of the steering column and the arrangement of the electrical outlet between the two side arms formed by said upper portion allows the electrical outlet to be protected from blows, scratches, or other defects, with the scooter being in the usage position.

"Side arms" are understood to be the fixed U-shaped bars making up the upper portion and connected to the lower portion by means of a forward-facing front joint.

According to one embodiment, the first axis of rotation defined by the retractable front hinge goes through the base platform, and wherein the base platform defines a hollow parallelepiped hole extending from the forward-facing front edge of the base platform to the back-facing rear edge of the base platform, wherein said hole is configured for accommodating therein the retractable front hinge. Advantageously, the lower portion of the steering column is parallel to the plane defined by the base platform with the electric scooter being in the folded position.

According to one embodiment, the front wheel comprises a disengagement mechanism with respect to the steering column, wherein the disengagement mechanism is configured for integrally linking the rotation of at least one grip bar with the rotation of the front wheel with the electric scooter being in the usage position. The commands for changing direction made by a user from the grip bars are thereby transmitted directly to the front wheel as a result of direct linkage through the steering column. Moreover, the disengagement mechanism enables a free rotational movement of the front wheel with respect to the steering column with the electric scooter being in the folded position. The electric wheel can therefore be arranged in the most suitable position, for example, above the base platform and essentially parallel thereto.

The electric scooter comprises at least one retractable rear support extending laterally from the back-facing rear edge of the base platform to connect the at least one rear wheel to the base platform. The retractable rear support is wing-shaped, where "wing-shaped" is understood to be the structure of the rear part which allows the rotations and aerodynamics of the electric scooter to be improved.

Preferably, two rear wheels are arranged on either side of the back-facing rear edge of the base platform and are connected to the base platform by corresponding wing-shaped retractable rear supports, allowing the rear wheels to be folded on one and the same axis of rotation towards the folded position on the base platform, before folding the lower portion of the steering column of the electric scooter.

The foldable electric scooter comprises a plurality of locking means between the grip bars and the upper portion allowing a quick adjustment of the working distance between the upper portion and the lower portion, between the lower portion and the base platform, and between the at least one rear wheel and the base platform, allowing the different components of the electric scooter to be kept and locked in their usage position and/or folded position.

The lower portion of the foldable electric scooter is configured as an electrical energy storage unit comprising an electrical outlet at the upper end of the lower portion of the steering column, such that, when the electric scooter is in the folded position, the electrical energy storage unit is preferably in a visible and accessible position, allowing the electric scooter to be recharged in the folded position. Furthermore, when the scooter is in the usage position, the electrical outlet is completely protected by the beveled part of the joint itself as it is arranged adjacent to the forward-facing front joint, accordingly damage to the electrical outlet is prevented in the event of collision or impacts.

Generally, charging systems have the function of recharging the battery, as well as providing current to the electrical energy-consuming elements which, in the case of the present invention, is an electric scooter. Some examples of the different ways in which a charging system can provide electrical power are as follows:
- Physical contact charging system: the rechargeable element is charged directly by physical contact between the plug which is part of the object itself and an electrical outlet.
- Induction charging system: Induction charging system comprises of generating an electromagnetic field by means of an energy emitter and capturing the energy at the other end through an energy receiver, wherein the energy emitter is the element providing the charge whereas the energy receiver is the element that can be charged. To achieve contact between the emitting element and the receiving element, both elements preferably have electromagnetic induction coils, wherein the emitting element is generally connected to the electric current and is made up of materials which facilitate the passage of electromagnetic waves to convert the electricity they receive from the socket into high-frequency AC, and in turn generates therewith an electromagnetic field that remains latent as it waits for the arrival towards the receiving element in order to be able to transmit the generated electricity. Energy transmission between the emitting element and the receiving element occurs without the need for a physical connection between them.

According to a second embodiment of the invention, a charging system for an electric scooter is provided, wherein the charging system comprises:
- an electric scooter as explained above,
- a transport backpack configured for housing therein the electric scooter in the folded position,
- a support structure for supporting the transport backpack comprising a base for an electrical power supply
- a support structure for supporting the transport backpack, wherein the support structure comprises an electrical terminal in connection with an electrical power supply, wherein the electrical terminal is arranged on an outer upper surface of the support structure, and wherein the electrical terminal can be electrically coupled with the electrical outlet of the electric scooter to provide electrical energy to said electric scooter, wherein the electrical outlet is arranged at the upper end of the lower portion of the steering column, in the vertical of the back-facing rear edge of the base platform with the electric scooter being in the folded position, wherein the transport backpack comprises electric transmission means arranged in a lower portion of said transport bag, such that when the transport bag is supported on the support structure, the electric transmission means are configured and arranged so that the electrical terminal of the support structure can be electrically coupled to the electrical outlet of an electrical storage unit included inside the lower portion of the steering column of the electric scooter.

The foldable electric scooter incorporates characteristic technical features that allow it to have a significantly lower volume in the compact folded position suitable for being introduced into a transport backpack to be transported by the user on the shoulders or by hand. Furthermore, the electric scooter can be charged, if it is in the folded position outside or inside the transport backpack. Advantageously, with the electric scooter inside of the bag, the charging thereof is allowed, preventing the user from having to remove the electric scooter from the transport backpack for charging.

In a first embodiment of the invention, the electric transmission means are an electrical energy-conducting material which can contact the electrical terminal of the charging base and the electrical outlet of the electric scooter. Preferably, the electrical energy-conducting material is located in the inner portion. Accordingly, the electrical outlet is facing the at least one electrical terminal of the support structure but separated by the electric transmission means. Since said electric transmission means are made up of an electricity-conducting material conductive, such as copper, iron, or the alloys thereof, electrical energy transmission is enabled. The electrical power supply is thereby capable of supplying electrical energy to the electrical energy storage unit of the foldable electric scooter by means of electrical contact between the electrical outlet and the electrical terminal. In addition to allowing the scooter to be electrically charged, the electric transmission means allow the lower area of the transport backpack to be leak-tight, thereby preventing the entry of external agents.

In a second embodiment of the invention, the electric transmission means are at least one port or hollow groove configured and arranged for enabling direct contact between the electrical terminal of the charging base and the electrical outlet of the electric scooter, such that, if the electric scooter can be charged by means of direct contact between both.

According to a third embodiment, the electric transmission means are manufactured in an electromagnetic wave-propagating material. In this manner, when the electric scooter is arranged in a transport position inside the transport backpack, since there is a receiving coil facing the electric transmission means arranged at the bottom of the transport backpack, electrical energy is supplied to the electrical energy storage unit of the foldable electric scooter. Inductive charging of the electric scooter is thereby allowed, while the lower area of the transport backpack is leak-tight.

Preferably, the transport backpack comprises guiding means configured for positioning the electric scooter in the folded position with respect to the electric transmission means, such that the base platform of the electric scooter has the dimensions and geometry of the bag. The complete fixing and coupling of the electric scooter to the transport backpack is thereby achieved when the electric scooter is introduced into the transport backpack. Furthermore, the electric transmission means facing the electrical outlet located at the end of the rear portion of the electric scooter are, in turn, allowed to be arranged facing the electrical terminal of the support structure. Accordingly, for any of the three embodiments of the present invention, electrical energy transfer between the electric scooter and the charging base is performed, allowing the charging process to take place properly.

The support structure is configured for vertically holding and positioning the transport backpack with respect to the electrical terminal of the support structure, such that the electrical outlet or electrical connector of the lower portion of the electric scooter can be electrically coupled to the electrical terminal of the support structure if the electric scooter is arranged inside the transport backpack.

Accordingly, in the folded position, the foldable electric scooter presents a comfortable way of transporting same using a backpack, wherein said transport bag has dimensions and geometry suitable for holding the electric scooter comfortably therein. Additionally, it has electric recharging means located at the end of the lower portion of the electric scooter for recharging from the electrical power supply both in the usage position and in the compact folded position in an easy and accessible manner.

Once the foldable electric scooter is assembled in the usage position outside the backpack, it becomes a scooter which allows the user to move around an urban environment in a safe and simple manner, with the characteristic that the base has specific geometry and dimensions which allows greater stability for the user to move around.

The electric scooter is an easy-to-use mobility device that is safe for the user. Changing the configuration of the electric scooter is part of the use of the product. Changing the configuration of the electric scooter results in a folded scooter, providing a small and more compact package to carry or store.

### Brief description of the figures

A more detailed explanation is given in the description that follows and is based on the attached figures:
Figure 1 shows a perspective profile view of a foldable electric scooter in the usage position,
Figure 2 shows a perspective profile view of the foldable electric scooter in the folded position,
Figure 3 shows a perspective profile view of the foldable electric scooter moving from the usage position to the folded position,
Figure 4 shows a perspective view of a transport backpack for the foldable electric scooter facing a base of an electrical power supply, and
Figure 5 shows a perspective view of the transport backpack of the foldable electric scooter placed on the support structure, such that the electrical power supply unit is being charged.

### Description

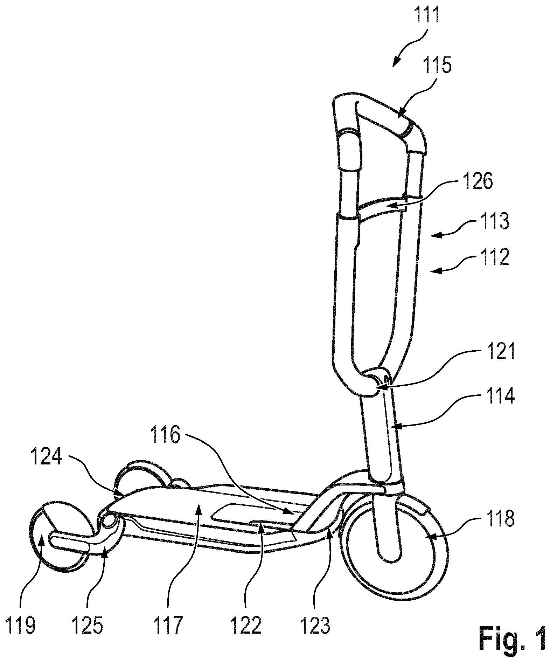

An embodiment of the claimed foldable electric scooter and its charging system are described below in reference to Figures 1 to 5.

Figure 1 illustrates, in detail, a foldable electric scooter 111 that is movable between a folded position and a usage and transport position, and vice versa, comprising a front drive wheel 118, two rear wheels 119, a flat base platform 117 extending between the two rear wheels 119 and the front wheel 118, a steering column 112 in turn comprising a lower portion 114 and an upper portion 113 pivotably connected to the base platform 117 by means of a retractable front hinge 116 arranged close to the front drive wheel 118, such that the steering column 112 is mechanically coupled at a lower end of the lower portion 114 to the front drive wheel 118, and at an upper end of the upper portion 113 to grip bars 115 or handlebars.

The upper portion 113 of the steering column 112 comprises an upward U-shaped geometry, such that the grip bars 115 are coupled by means of a telescopic attachment that can be arranged inside the upper portion 113, which allows the height of the steering column 112 to be adjusted.

The lower portion 114 of the steering column 112 is formed by a single longitudinal bar arranged centered with respect to side arms 127 of the upward U-shaped upper portion 113. The lower portion 114 is arranged between both side arms 127 with the electric scooter 111 being in the folded position. In said position, the arms forming the U-shaped geometry of the upper portion 113 form a prolongation of the lower portion 114 of the steering column 112, extending essentially in one and the same plane. Said plane is arranged at an angle essentially between 70 ° and 90 ° with respect to the base platform of the electric scooter 111, allowing said electric scooter 111 to be used comfortably.

The upper portion 113 comprises a concave bar 126 arranged horizontally between both side arms 127 of the U-shaped upper portion 113, wherein said concave bar 126 enables a support surface for children.

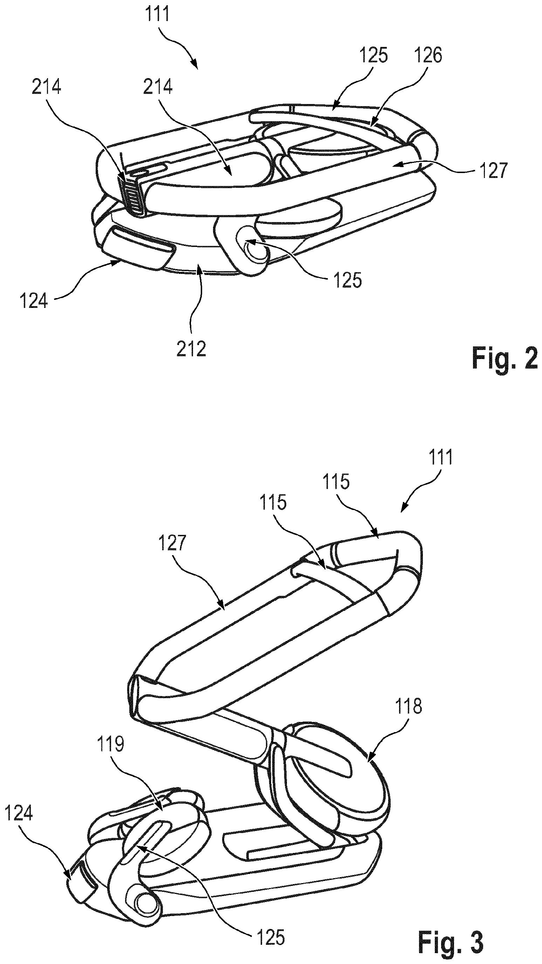

Furthermore, as seen in Figure 2, the concave bar 126 of the upper portion 113 serves to retain the front wheel 118 if the electric scooter 111 is in a folded arrangement, such that concave bar 126 accommodates, protects, and retains the front wheel 118.

The front drive wheel 118 comprises a disengagement mechanism with respect to the steering column 112, wherein the disengagement mechanism is configured for integrally linking the rotation of at least one grip bar 115 with the rotation of the front wheel 118 with the electric scooter 111 being in the usage position, and for enabling a free rotational movement of the front wheel 118 with respect to the steering column 112 with the electric scooter 111 being in the folded position.

The movement of folding and unfolding the electric scooter 111 can be seen in more detail in Figure 3, in which a retractable front hinge 116 is observed to pivotably connect the lower end of the lower portion 114 of the steering column 112 to the forward-facing front edge 123 of the base platform 117.

To ensure that the electric scooter 111 takes up a very small volume of space in its folded position, the electric scooter advantageously has a forward-facing front joint 121 pivotably connecting the upper end of the lower portion 114 with the lower end of the upper portion 113 of the steering column 112, such that the steering column 112 is movable between the usage position in which the upper portion 113 is arranged as a prolongation of the lower portion 114, the lower portion 114 and the upper portion 113 being at an angle between 70° and 90° with respect to the plane defined by the base platform 117, and the folded position in which the lower portion 114 and the upper portion 113 are arranged above the base platform 117 and substantially parallel to the plane defined by the base platform 117.

As can be seen in Figure 3, the retractable front hinge 116 defines a first axis of rotation for pivoting the lower portion 114 of the steering column 112 towards the base platform 117 according to a first direction of rotation. The retractable front hinge 116 allows the lower portion 114 to be pivoted with respect to the base platform 117 and to be folded towards the base platform 117.

The forward-facing front joint 121 in turn defines a second axis of rotation for pivoting, in turn, the upper portion 113 of the steering column 112 with respect to the lower portion 114 thereof according to a direction of rotation opposite the first direction of rotation. The forward-facing front joint 121 allows the upper portion 113 114 to be pivoted with respect to the lower portion 114 and to be folded towards the lower portion 114.

As can be seen in Figure 2, in the folded position of the electric scooter 111, the retractable hinge 116 is housed in a hollow parallelepiped through hole 122 present in the base platform 117, extending from the forward-facing front edge 123 of the base platform 117 to the back-facing rear edge 124 of the base platform 117.

The grip bars 115 and the upper portion 113 are arranged such that they can pivot together with respect to the lower portion 114 which can in turn pivot independently towards the base platform 117, allowing a compact sandwich-type configuration in the folded position of the foldable electric scooter 111.

The foldable electric scooter 111 comprises a retractable rear support 125 extending laterally from the back-facing rear edge 124 of the base platform 117 for mechanically connecting the corresponding rear wheel 119 to the base platform 117. The retractable rear support 125 is wing-shaped, allowing the rear wheel 118 to be folded on the base platform 117 if the electric scooter 111 is in the folded position.

The base platform 117 comprises two inclined planes arranged, respectively, on the corners of the back-facing rear edge 124. One end of the wing-shaped retractable rear support 125 is mechanically coupled to the corresponding inclined plane 212, allowing the rotation of the rear wheel 119 from an arrangement perpendicular to the rolling plane, and also perpendicular to the base platform 117 itself, to a standby arrangement in which the rear wheels 119 are arranged essentially parallel to the base platform 117.

Preferably, two rear wheels 119 are arranged on either side of the back-facing rear edge 124 of the base platform 117 and are connected to the base platform 117 by wing-shaped retractable rear supports 125, allowing the rear wheels 119 to be folded into the folded position on the base platform 117, before folding the lower portion 114 of the steering column 112.

The grip bars 115 are longitudinally movable by way of the entry thereof into the upper portion 113 for increasing or reducing the working distance of the grip bars 115, adapting the working distance to the user's height.

Likewise, if the grip bars 115 are not locked, they can rotate about a vertical longitudinal axis if the lower end of the grip bars 115 are introduced into the corresponding upper end of the upper portion 113 of the steering column 112. Therefore, the opposite ends of the lower ends of the grip bars 115 can describe respective closed circumferences.

The foldable electric scooter 111 comprises a plurality of locking means between the grip bars 115 and the upper portion 113, allowing a quick adjustment of the working distance between the upper portion 113 and the lower portion 112, between the lower portion 112 and the base platform 117, and between the at least one rear wheel 119 and the base platform 117, preventing the electric scooter 111 from unfolding when it is transported by hand or inside the transport backpack 215. Likewise, the locking means also prevent the electric scooter 111 from folding when it is being used by the user.

The retractable hinge 116, the forward-facing front joint 121, and the retractable rear supports 125 allow a compact configuration of the electric scooter 111 in the folded position.

The change of configuration or folding of the electric scooter 111 takes place in a few steps, as shown in Figure 3. The electric scooter 111 is in the usage or unfolded position, the grip bars 115 are rotated as a whole towards the inside of the side bars forming a V and are introduced into the upper portion 113 by way of entering same, the locking mechanism of the retractable front hinge 116 is released subsequently or simultaneously to rotate the lower portion 114 of the steering column 112 towards the inside of the base platform 117. At the same time, the at least rear wheel 119 rotates about the retractable rear support 125 and the retractable front hinge 116 is accommodated inside the parallelepiped hole 122, creating a first folding plane formed by the at least one rear wheel 119, the front wheel 118, and the lower portion 114. Next, the forward-facing front joint 121 is unlocked to proceed with the folding of the upper portion 113 in the direction opposite the base platform 117, forming a second plane. Accordingly, a compact sandwich-type structure which forms the folded position is obtained.

The lower portion 114 of the folding electric scooter 111 is configured as an electrical energy storage unit 214 comprising an electric outlet 211 at the upper end of the lower portion 114 of the steering column 112. The electrical energy storage unit 214 is rechargeable in the folded position of the folding electric scooter 111. Therefore, the electrical storage unit is arranged inside the lower portion 114 of the steering column 112 and connected to the electrical outlet 211.

The electrical outlet 211 is arranged at the upper end of the lower portion 114 of the steering column 112, being arranged in the vertical of the back-facing rear edge 124 of the base platform 117, with the electric scooter 111 being in the usage position, such that the electrical outlet 211 remains in a protected position, preventing material damage.

Accordingly, the distance between the first axis of rotation and the upper end of the lower portion 114 is substantially equal to the distance between the first axis of rotation and the back-facing rear edge 124 of the base platform 117.

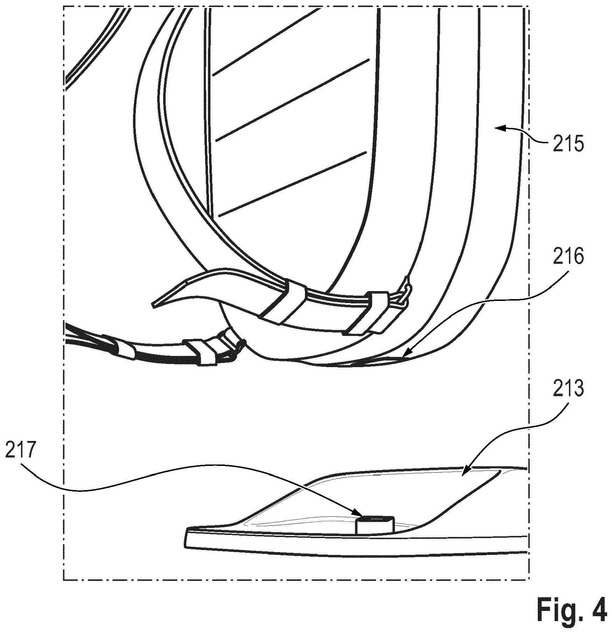

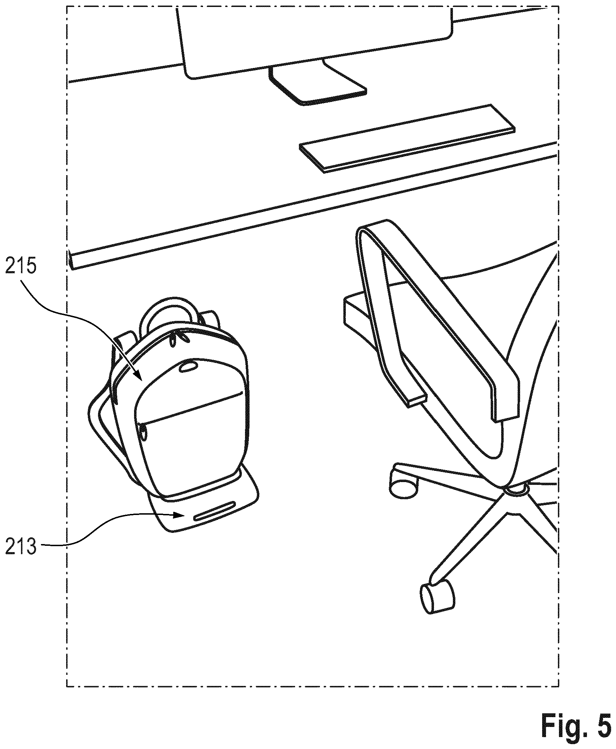

As shown in Figures 4 and 5, the present invention also relates to a charging system for the foldable electric scooter 111 comprising a transport backpack 215 which can house therein the electric scooter 111 in the folded position, a support structure 213 for supporting the transport backpack 215 an outer upper surface of said support structure 213.

As shown in figure 4, the transport backpack 215 comprises electric transmission means 216 arranged at the bottom of the transport backpack 215, such that an electrical outlet 211 is aligned with said electric transmission means 216. In the particular case of the depicted drawings, the electric transmission means 216 are made of an electrical energy-conducting material.

For its part, the support structure 213 is configured for supporting the transport backpack 215. Said support structure 213 has an electrical terminal 217 projecting from the outer surface of the support structure 213.

As can be seen in figure 5, the objective of the present invention is to charge the electric scooter 111 when it is in its folded position inside the transport backpack 215, said transport backpack 215 being supported on the support structure 213. In this configuration, the electrical terminal 217 of the support structure 213, which is connected to an electrical power supply, transfers electrical energy to the electrical outlet 211 (not shown in the figures) of the electric scooter 111. This transmission is possible since the electrical outlet 211 is aligned with the electric transmission means 216 and, in turn, with the electrical terminal of the support structure 213, thereby charging the electrical storage unit of the electric scooter 111.

The transport backpack 215 comprises guiding means that position the electric scooter 111 folded and stored inside the transport backpack 215 with respect to the electric transmission means 216. The arrangement of the electrical outlet 211 facing and in contact with the electric transmission means 216 is thereby assured.

For its part, the support structure 213 vertically holds and positions the transport backpack 215 with respect to the electrical terminal 217 of the support structure 213 using support means, such that the electrical outlet 211 of the lower portion 114 can be electrically coupled to the electrical terminal 217 of the support structure 213 if the electric scooter 111 is arranged inside the transport bag 215. By means of said support means, such as projections configured for being coupled with ports of the transport backpack 215, said transport backpack 215 is positioned with respect to the support structure 213, thereby allowing the charging of the electric scooter 111.

### LIST OF REFERENCE NUMBERS

111 foldable electric scooter
112 steering column
113 upper portion
114 lower portion
115 grip bars
116 retractable front hinge
117 base platform
118 front wheel
119 rear wheel
121 forward-facing front joint
122 hollow parallelepiped hole
123 forward-facing front edge
124 back-facing rear edge
125 retractable rear support
126 concave bar
127 side arms
211 electrical outlet
212 inclined plane
213 support structure
214 electrical energy storage unit
215 transport backpack
216 electric transmission means
217 electrical terminal

## Claims

1. An electric scooter comprising:
- a front wheel (118),
- at least one rear wheel (119),
- a base platform (117) extending between the at least one rear wheel (119) and the front wheel (118), and
- a steering column (112) comprising a lower portion (114) and an upper portion (113), wherein the steering column (112) is mechanically coupled at a lower end of the lower portion (114) to the front wheel (118), and at an upper end of the upper portion (113) to some grab bars (115),
wherein the electric scooter (111) comprises a retractable front hinge (116) mechanically linking the lower portion (114) of the steering column (112) to the base platform (117), and a forward-facing front joint (121) mechanically linking the upper portion (113) of the steering column (112) with the lower portion (114) thereof, the retractable front hinge (116) defines a first axis of rotation, wherein the retractable front hinge (116) is configured for rotating the lower portion (114) of the steering column (112) towards the base platform (117) according to a first direction of rotation,
wherein the forward-facing front joint (121) defines a second axis of rotation and is configured for rotating the upper portion (113) of the steering column (112) with respect to the lower portion (114) thereof according to a direction of rotation opposite the first direction of rotation,
wherein the steering column (112) is movable between a usage position in which the upper portion (113) is arranged as a prolongation of the lower portion (114), the lower portion (114) and the upper portion (113) being at an angle between 70° and 90° with respect to the plane defined by the base platform (117), and a folded position in which the lower portion (114) and the upper portion (113) are arranged above the base platform (117) and substantially parallel to the plane defined by said base platform (117),
**characterized in that** the lower portion (114) is configured as an electrical energy storage unit (214) comprising an electrical outlet (211) arranged at the upper end of the lower portion (114) of the steering column (112), wherein the electrical outlet (211) is arranged in the vertical of the back-facing rear edge (124) of the base platform (117), when the electric scooter (111) is in the folded position.

2. The scooter according to claim 1, wherein the distance between the first axis of rotation and the electrical outlet (211) of the lower portion (114) is substantially equal to the distance between the first axis of rotation and the back-facing rear edge (124) of the base platform (117).

3. The scooter according to any of claims 1 or 2, wherein the upper portion (113) of the steering column (112) comprises a U-shaped geometry, wherein the grip bars (115) are arranged at the upper end of the upper portion (113).

4. The scooter according to claim 3, wherein the grip bars (115) are movable by way of the entry thereof into the upper portion (114) for increasing or reducing the working distance of the grip bars (115) so as to adapt the working distance to the user's height.

5. The electric scooter according to one of claims 4 or 3, wherein the lower portion (114) of the steering column (112) is arranged centered with respect to side arms (127) of the U-shaped upper portion (113), such that the electrical outlet (211) of the lower portion (114) is arranged between both side arms (127) of the lower portion (114) with the electric scooter (111) being in the usage position.

6. The scooter according to any of the preceding claims, wherein the front wheel (118) comprises a disengagement mechanism with respect to the steering column (112), wherein the disengagement mechanism is configured for integrally linking the rotation of at least one grip bar (115) with the rotation of the front wheel (118) with the electric scooter (111) being in the usage position, and for enabling a free rotational movement of the front wheel (118) with respect to the steering column (112) with the electric scooter (111) being in the folded position.

7. A charging system for an electric scooter (111), wherein the charging system comprises:
- an electric scooter (111) according to any of claims 1 to 6,
- a transport backpack (215) configured for housing the electric scooter (111) in the folded position,
- a support structure (213) for supporting the transport backpack (215), wherein the support structure (213) comprises an electrical terminal (217) in connection with an electrical power supply, wherein the electrical terminal (217) is arranged on an outer upper surface of the support structure (213), and wherein the electrical terminal (217) can be electrically coupled with an electrical outlet (211) of the electric scooter (111) to provide electrical energy to said electric scooter (111),
wherein the transport backpack (215) comprises electric transmission means (216) arranged in a lower portion (114) of said transport bag (215), such that when the transport bag (215) is supported on the support structure (213), the electric transmission means (216) are configured and arranged so that the electrical terminal (217) of the support structure (213) can be electrically coupled to the electrical outlet (211) of an electric storage unit included inside the lower portion (114) of the steering column (112) of the electric scooter (111).

8. The system according to claim 7, wherein the electric transmission means (216) comprise an electrical energy-conducting material that can contact the electrical terminal (217) of the support structure (216) and the electrical outlet (211) of the electric scooter (111).

9. The system according to claim 8, wherein the electric transmission means (216) comprise at least one hollow groove configured and arranged for enabling direct contact between the electrical terminal (217) of the support structure (216) and the electrical outlet (211) of the electric scooter (111).

10. The system according to claim 8, wherein the electric transmission means (216) are manufactured in an electromagnetic wave-propagating material.

11. The system according to any of claims 8 to 10, wherein the transport backpack (215) comprises guiding means configured for positioning the electric scooter (111) in the folded position with respect to the hollow groove (216).

12. The system according to any of claims 8 to 11, wherein the support structure (213) is configured for vertically holding and positioning the transport backpack (215) with respect to the electrical terminal (217) of the support structure (213), such that the electrical outlet (211) of the lower portion (114) can be electrically coupled to the electrical terminal (217) of the support structure (213) if the electric scooter (111) is arranged inside the transport backpack (215).

## Patentansprüche

1. Elektroscooter, umfassend:
- ein Vorderrad (118),
- mindestens ein Hinterrad (119),
- eine Basisplattform (117), die sich zwischen dem mindestens einen Hinterrad (119) und dem Vorderrad (118) erstreckt, und
- eine Lenksäule (112), die einen unteren Abschnitt (114) und einen oberen Abschnitt (113) umfasst, wobei die Lenksäure (112) an einem unteren Ende des unteren Abschnitts (114) mechanisch mit dem Vorderrad (118) gekoppelt ist und an einem oberen Ende des oberen Abschnitts (113) mit einigen Greifstangen (115),
wobei der Elektroscooter (111) ein zurückziehbares vorderes Scharnier (116) umfasst, das den unteren Abschnitt (114) der Lenksäule (112) mechanisch mit der Basisplattform (117) verbindet, und ein nach vorn weisendes vorderes Gelenk (121), das den oberen Abschnitt (113) der Lenksäule (112) mit deren unterem Abschnitt (114) verbindet, das zurückziehbare vordere Scharnier (116) eine erste Drehachse definiert, wobei das zurückziehbare vordere Scharnier (116) zum Drehen des unteren Abschnitts (114) der Lenksäule (112) zu der Basisplattform (117) gemäß einer ersten Drehrichtung gestaltet ist,
wobei das nach vorn weisende vordere Gelenk (121) eine zweite Drehachse definiert und zum Drehen des oberen Abschnitts (113) der Lenksäule (112) in Bezug auf deren unteren Abschnitt (114) gemäß einer Drehrichtung entgegengesetzt zu der ersten Drehrichtung gestaltet ist,
wobei die Lenksäule (112) zwischen einer Nutzungsposition, in der der obere Abschnitt (113) als eine Verlängerung des unteren Abschnitts (114) angeordnet ist, wobei der untere Abschnitt (114) und der obere Abschnitt (113) in einem Winkel von 70° bis 90° in Bezug auf die von der Basisplattform (117) gebildete Ebene liegen, und einer zusammengeklappten Position, in der der untere Abschnitt (114) und der obere Abschnitt (113) über der Basisplattform (117) angeordnet sind und im Wesentlichen parallel zu der von der Basisplattform (117) gebildeten Ebene liegen, beweglich ist, **dadurch gekennzeichnet, dass** der untere Abschnitt (114) als eine Elektroenergie-Speichereinheit (214) gestaltet ist, die einen elektrischen Ausgang (211) umfasst, der an dem oberen Ende des unteren Abschnitts (114) der Lenksäule (112) angeordnet ist, wobei der elektrische Ausgang (211) in der Vertikalen des nach hinten weisenden hinteren Randes (124) der Basisplattform (117) angeordnet ist, wenn sich der Elektroscooter (111) in der zusammengeklappten Position befindet.

2. Scooter nach Anspruch 1, wobei die Distanz zwischen der ersten Drehachse und dem elektrischen Ausgang (211) des unteren Abschnitts (114) im Wesentlichen gleich der Distanz zwischen der ersten Drehachse und dem nach hinten weisenden hinteren Rand (124) der Basisplattform (117) ist.

3. Scooter nach einem der Ansprüche 1 oder 2, wobei der obere Abschnitt (113) der Lenksäule (112) eine U-förmige Geometrie umfasst, wobei die Greifstangen (115) an einem oberen Ende des oberen Abschnitts (113) angeordnet sind.

4. Scooter nach Anspruch 3, wobei die Greifstangen (115) mittels deren Eintritt in den oberen Abschnitt (114) beweglich sind, um den Arbeitsabstand der Greifstangen (115) zu erhöhen oder zu verringern, um den Arbeitsabstand an die Körpergröße des Benutzers anzupassen.

5. Scooter nach einem der Ansprüche 4 oder 3, wobei der untere Abschnitt (114) der Lenksäule (112) zentriert in Bezug auf Seitenarme (127) des U-förmigen oberen Abschnitts (113) angeordnet ist, so dass der elektrische Ausgang (211) des unteren Abschnitts (114) zwischen beiden Seitenarmen (127) des unteren Abschnitts (114) angeordnet ist, wenn sich der Elektroscooter (111) in der Nutzungsposition befindet.

6. Scooter nach einem der vorhergehenden Ansprüche, wobei das Vorderrad (118) einen Abkopplungsmechanismus in Bezug auf die Lenksäule (112) umfasst, wobei der Abkopplungsmechanismus dazu gestaltet ist, die Drehung mindestens einer Greifstange (115) fest mit der Drehung des Vorderrads (118) zu verbinden, wenn sich der Elektroscooter (111) in der Nutzungsposition befindet, und eine freie Drehbewegung des Vorderrads (118) in Bezug auf die Lenksäule (112) zu ermöglichen, wenn sich der Elektroscooter (111) in der zusammengeklappten Position befindet.

7. Ladesystem für einen Elektroscooter (111), wobei das Ladesystem Folgendes umfasst:
- einen Elektroscooter (111) nach einem der Ansprüche 1 bis 6,
- einen Transportrucksack (215), der dazu gestaltet ist, den Elektroscooter (111) in der zusammengeklappten Position zu beherbergen,
- eine Stützstruktur (213) zum Abstützen des Transportrucksacks (215), wobei die Stützstruktur (213) einen elektrischen Anschluss (217) in Verbindung mit einer Elektroenergieversorgung umfasst, wobei der elektrische Anschluss (217) an einer äußeren oberen Oberfläche der Stützstruktur (213) angeordnet ist und wobei der elektrische Anschluss (217) elektrisch mit einem elektrischen Ausgang (211) des Elektroscooters (111) gekoppelt werden kann, um Elektroenergie für den Elektroscooter (111) bereitzustellen,
wobei der Transportrucksack (215) elektrische Übertragungsmittel (216) umfasst, die in einem unteren Abschnitt (114) des Transportrucksacks (215) angeordnet sind, so dass, wenn der Transportrucksack (215) auf der Stützstruktur (213) abgestützt ist, die elektrischen Übertragungsmittel (216) dazu gestaltet sind und derart angeordnet sind, dass der elektrische Anschluss (217) der Stützstruktur (213) elektrisch mit dem elektrischen Ausgang (211) einer elektrischen Speichereinheit gekoppelt werden kann, die im unteren Abschnitt (114) der Lenksäule (112) des Elektroscooters (111) enthalten ist.

8. System nach Anspruch 7, wobei die elektrischen Übertragungsmittel (216) ein Elektroenergie leitendes Material umfassen, das mit dem elektrischen Anschluss (217) der Stützstruktur (216) und dem elektrischen Ausgang (211) des Elektroscooters (111) in Kontakt sein kann.

9. System nach Anspruch 8, wobei die elektrischen Übertragungsmittel (216) mindestens eine Hohlkerbe umfassen, die dazu gestaltet und angeordnet ist, um einen direkten Kontakt zwischen dem elektrischen Anschluss (217) der Stützstruktur (216) und dem elektrischen Ausgang (211) des Elektroscooters (111) zu ermöglichen.

10. System nach Anspruch 8, wobei die elektrischen Übertragungsmittel (216) in einem elektromagnetische Wellen ausbreitenden Material hergestellt sind.

11. System nach einem der Ansprüche 8 bis 10, wobei der Transportrucksack (215) Führungsmittel umfasst, die dazu gestaltet sind, den Elektroscooter (111) in der zusammengeklappten Position in Bezug auf die Hohlkerbe (216) zu positionieren.

12. System nach einem der Ansprüche 8 bis 11, wobei die Stützstruktur (213) dazu gestaltet ist, den Transportrucksack (215) in Bezug auf den elektrischen Anschluss (217) der Stützstruktur (213) vertikal zu halten und zu positionieren, so dass der elektrische Ausgang (211) des unteren Abschnitts (114) elektrisch mit dem elektrischen Anschluss (217) der Stützstruktur (213) gekoppelt werden kann, wenn der Elektroscooter (111) in dem Transportrucksack (215) angeordnet ist.

## Revendications

1. Trottinette électrique comprenant :
une roue avant (118),
au moins une roue arrière (119),
une plateforme de base (117) s'étendant entre la au moins une roue arrière (119) et la roue avant (118), et
une colonne de direction (112) comprenant une partie inférieure (114) et une partie supérieure (113), dans laquelle la colonne de direction (112) est mécaniquement couplée, au niveau d'une extrémité inférieure de la partie inférieure (114), à la roue avant (118), et au niveau d'une extrémité supérieure de la partie supérieure (113), à certaines barres d'appui (115),
dans laquelle la trottinette électrique (111) comprend une charnière avant rétractable (116) reliant mécaniquement la partie inférieure (114) de la colonne de direction (112) à la plateforme de base (117), et une articulation avant orientée vers l'avant (121) reliant mécaniquement la partie supérieure (113) de la colonne de direction (112) avec sa partie inférieure (114), la charnière avant rétractable (116) définit un premier axe de rotation, dans laquelle la charnière avant rétractable (116) est configurée pour faire tourner la partie inférieure (114) de la colonne de direction (112) vers la plateforme de base (117) selon une première direction de rotation,
dans laquelle l'articulation avant orientée vers l'avant (121) définit un second axe de rotation et est configurée pour faire tourner la partie supérieure (113) de la colonne de direction (112) par rapport à sa partie inférieure (114) selon une direction de rotation opposée à la première direction de rotation,
dans laquelle la colonne de direction (112) est mobile entre une position d'usage dans laquelle la partie supérieure (113) est agencée en tant que prolongement de la partie inférieure (114), la partie inférieure (114) et la partie supérieure (113) étant à un angle entre 70° et 90° par rapport au plan défini par la plateforme de base (117), et une position pliée dans laquelle la partie inférieure (114) et la partie supérieure (113) sont agencées au-dessus de la plateforme de base (117) et sensiblement parallèles au plan défini par ladite plateforme de base (117), **caractérisée en ce que** la partie inférieure (114) est configurée comme une unité de stockage d'énergie électrique (214) comprenant une sortie électrique (211) agencée au niveau de l'extrémité supérieure de la partie inférieure (114) de la colonne de direction (112), dans laquelle la sortie électrique (211) est agencée à la verticale du bord arrière orienté vers l'arrière (124) de la plateforme de base (117), lorsque la trottinette électrique (111) est dans la position pliée.

2. Trottinette selon la revendication 1, dans laquelle la distance entre le premier axe de rotation et la sortie électrique (211) de la partie inférieure (114) est sensiblement égale à la distance entre le premier axe de rotation et le bord arrière orienté vers l'arrière (124) de la plateforme de base (117).

3. Trottinette selon l'une quelconque des revendications 1 ou 2, dans laquelle la partie supérieure (113) de la colonne de direction (112) comprend une géométrie en forme de U, dans laquelle les barres de préhension (115) sont agencées au niveau de l'extrémité supérieure de la partie supérieure (113).

4. Trottinette selon la revendication 3, dans laquelle les barres de préhension (115) sont mobiles au moyen de leur entrée dans la partie supérieure (114) pour augmenter ou réduire la distance de travail des barres de préhension (115) afin d'adapter la distance de travail à la stature de l'utilisateur.

5. Trottinette électrique selon l'une des revendications 4 ou 3, dans laquelle la partie inférieure (114) de la colonne de direction (112) est agencée au centre par rapport aux bras latéraux (127) de la partie supérieure en forme de U (113), de sorte que la sortie électrique (211) de la partie inférieure (114) est agencée entre les deux bras latéraux (127) de la partie inférieure (114) avec la trottinette électrique (111) qui est dans la position d'utilisation.

6. Trottinette selon l'une quelconque des revendications précédentes, dans laquelle la roue avant (118) comprend un mécanisme de dégagement par rapport à la colonne de direction (112), dans laquelle le mécanisme de dégagement est configuré pour relier, de manière solidaire, la rotation de la au moins une barre de préhension (115) avec la rotation de la roue avant (118), avec la trottinette électrique (111) qui est dans la position d'utilisation, et pour permettre un mouvement à rotation libre de la roue avant (118) par rapport à la colonne de direction (112), avec la trottinette électrique (111) qui est dans la position pliée.

7. Système de charge pour une trottinette électrique (111), dans lequel le système de charge comprend :
une trottinette électrique (111) selon l'une quelconque des revendications 1 à 6,
un sac à dos de transport (215) configuré pour loger la trottinette électrique (111) dans la position pliée,
une structure de transport (213) pour supporter le sac à dos de transport (215), dans lequel la structure de support (213) comprend une borne électrique (217) en raccordement avec une alimentation électrique, dans lequel la borne électrique (217) est agencée sur une surface supérieure externe de la structure de support (213), et dans lequel la borne électrique (217) peut être électriquement couplée avec une prise électrique (211) de la trottinette électrique (111) pour fournir l'énergie électrique à ladite trottinette électrique (111),
dans lequel le sac à dos de transport (215) comprend des moyens de transmission électrique (216) agencés dans une partie inférieure (114) dudit sac de transport (215), de sorte que lorsque le sac de transport (215) est supporté sur la structure de support (213), les moyens de transmission électrique (216) sont configurés et agencés de sorte que la borne électrique (217) de la structure de support (213) peut être électriquement couplée à la prise électrique (211) d'une unité de stockage électrique incluse à l'intérieur de la partie inférieure (114) de la colonne de direction (112) de la trottinette électrique (111).

8. Système selon la revendication 7, dans lequel les moyens de transmission électrique (216) comprennent un matériau de conduction d'énergie électrique qui peut mettre en contact la borne électrique (217) de la structure de support (216) et la prise électrique (211) de la trottinette électrique (111).

9. Système selon la revendication 8, dans lequel les moyens de transmission électrique (216) comprennent au moins une rainure creuse configurée et agencée pour permettre le contact direct entre la borne électrique (217) de la structure de support (216) et la prise électrique (211) de la trottinette électrique (111).

10. Système selon la revendication 8, dans lequel les moyens de transmission électrique (216) sont fabriqués avec un matériau de propagation d'onde électromagnétique.

11. Système selon l'une quelconque des revendications 8 à 10, dans lequel le sac à dos de transport (215) comprend des moyens de guidage configurés pour positionner la trottinette électrique (111) dans la position pliée par rapport à la rainure creuse (216).

12. Système selon l'une quelconque des revendications 8 à 11, dans lequel la structure de support (213) est configurée pour maintenir verticalement et positionner le sac à dos de transport (215) par rapport à la borne électrique (217) de la structure de support (213), de sorte que la prise électrique (211) de la partie inférieure (114) peut être électriquement couplée à la borne électrique (217) de la structure de support (213) si la trottinette électrique (111) est agencée à l'intérieur du sac à dos de transport (215).
